# EUROPEAN PATENT APPLICATION

(11) **EP 2 169 045 A1**
(43) Date of publication of application: **31.03.2010**
(21) Application number: 08777546.6
(22) Date of filing: 24.06.2008
(51) Int. Cl.: C12G 3/02

(54) **SPARKLING ALCOHOLIC BEVERAGE, AND METHOD FOR PRODUCTION THEREOF**

(30) Priority: 25.06.2007 JP 2007166662
(71) Applicant: Sapporo Breweries Limited, Tokyo 150-8522 (JP)
(72) Inventor: KIMURA, Tatsuji, Yaizu-shi Shizuoka 425-0013 (JP); KINO, Hiroyasu, Yaizu-shi Shizuoka 425-0013 (JP); TAKOI, Kiyoshi, Yaizu-shi Shizuoka 425-0013 (JP); KAMIYA, Soichi, Tokyo 150-8522 (JP)
(74) Representative: Winter, Brandl, Fürniss, Hübner Röss, Kaiser, Polte Partnerschaft Patent- und Rechtsanwaltskanzlei
(86) International application number: PCT/JP2008/061469
(87) International publication number: WO 2009/001824

(57) **Abstract**

Provided is a method of manufacturing a sparkling alcoholic beverage excellent in properties such as flavor without using hops as part of raw materials. The method of manufacturing a sparkling alcoholic beverage includes: a pre-fermentation step (10) of preparing a pre-fermentation solution by using germinated yellow peas without using hops as part of the raw materials; and a fermentation step (11) of conducting alcohol fermentation by adding a yeast to the pre-fermentation solution.

## Description

### TECHNICAL FIELD

The present invention relates to a sparkling alcoholic beverage and a manufacturing method therefor, and more particularly, to a sparkling alcoholic beverage which can be obtained by utilizing alcohol fermentation using a yeast, and a manufacturing method therefor.

### BACKGROUND ART

Recently, there are appearing on the market beer-like sparkling alcoholic beverages produced by using malt in a smaller amount compared with the amount used in beer, or without using malt (see, e.g., Patent Document 1).

For the production of such beer-like sparkling alcoholic beverages, it has conventionally been essential to use hops as part of the raw materials thereof in order to impart properties, such as flavor and bitterness similar to beer, to the beverages. Patent Document 1: JP 3836117 B

### DISCLOSURE OF THE INVENTION

### Problems to be Solved by the Invention

In the case of use of hops as part of the raw materials, however, problems specific to the hops may occur.

Specifically, when the above-mentioned conventional sparkling alcoholic beverage is exposed to sunlight, for example, an undesirable off-odor (so-called sunlight flavor) is generated by degeneration of components derived from hops.

Further, for example, the productivity of the above-mentioned conventional sparkling alcoholic beverage may be restricted depending on the harvest period and storage mode of hop.

In the manufacture of the above-mentioned conventional sparkling alcoholic beverage, although the above-mentioned problems exist, impairment of properties thereof, such as extreme dilution of flavor and the like, may not be prevented if the hops are not used as part of the raw materials.

The present invention has been made in view of the above-mentioned problems, and one of the objects of the present invention is providing a sparkling alcoholic beverage excellent in properties such as flavor, without using hops as part of the raw materials, and a method of manufacturing the same.

### Means for Solving the Problems

In order to solve the above-mentioned problems, a method of manufacturing a sparkling alcoholic beverage according to one embodiment of the present invention is characterized by including: a pre-fermentation step of preparing a pre-fermentation solution by using germinated yellow peas without using hops as part of the raw materials; and a fermentation step of conducting alcohol fermentation by adding a yeast to the pre-fermentation solution. The alcoholic beverage according to the present invention is, for example, a beverage containing ethanol in a concentration of 1 vol% or more. The sparkling alcoholic beverage according to the present invention is, for example, an alcoholic beverage having a frothing by which a foam layer is formed on an upper part of a liquid level when poured into a vessel such as a glass, and a foam-stability by which the formed foam is held for a certain period of time or longer. Specifically, this sparkling alcoholic beverage is, for example, an alcoholic beverage exhibiting a NIBEM value (unit representing the foam-stability) according to the European Brewery Convention (EBC) method of 50 or more.

According to the present invention, there may be provided a method of manufacturing a sparkling alcoholic beverage excellent in properties such as flavor without using hops as part of the raw materials. That is, according to the present invention, there may be produced a sparkling alcoholic beverage not only capable of reliably avoiding occurrence of problems specific to hops in the sparkling alcoholic beverage to be produced, but also having properties not conventionally found, such as flavor specific to the germinated yellow peas.

Further, the pre-fermentation solution may be prepared by using the germinated yellow peas in a range of 0.01 mass% to 0.35 mass% with respect to the raw materials in the pre-fermentation step. In this case, a sparkling alcoholic beverage particularly excellent in properties such as flavor may be produced.

In order to solve the above-mentioned problems, a sparkling alcoholic beverage according to one embodiment of the present invention is characterized by being produced by any one of the above-mentioned methods of producing an alcoholic beverage. According to the present invention, there may be provided a sparkling alcoholic beverage which is produced without using hops as part of the raw materials and excellent in properties such as flavor. That is, according to the present invention, there may be provided a sparkling alcoholic beverage that does not cause problems specific to hops and having properties not conventionally found, such as flavor specific to the germinated yellow peas.

Thus, as a result of intensive study, the inventors of the present invention have uniquely found that the sparkling alcoholic beverage excellent in properties such as flavor may be produced without using hops, by preparing the pre-fermentation solution using the germinated yellow peas as part of the raw materials.

Specifically, in conventional methods of producing a sparkling alcoholic beverage which premises the use of hops as part of the raw materials, even if it is found that properties such as flavor of the sparkling alcoholic beverage to be finally obtained are improved by, for example, using other raw materials in addition to the hop, this improvement is only an additional matter to properties such as flavor imparted by the hop. Thus, such a finding is not necessarily applicable to the case of non use of hops. Basically, there have been only scarce trials for replacing properties imparted by hops using other raw materials, and it is not clear whether such replacement is possible or not.

In contrast, as a result of advancing unique studies, the inventors of the present invention have newly found that a sparkling alcoholic beverage having effectively induced properties resulting from germinated yellow peas, and thus excellent in properties such as flavor, may be produced by using the germinated yellow peas without using hops.

### BRIEF DESCRIPTION OF THE DRAWINGS

FIG. 1 is a flow chart illustrating main steps included in a method of manufacturing a sparkling alcoholic beverage according to one embodiment of the present invention.
FIG. 2 is an explanatory view illustrating a change over time of an extract concentration in a fermentation solution in the case of use of germinated yellow peas in the method of manufacturing a sparkling alcoholic beverage according to the embodiment of the present invention.
FIG. 3 is an explanatory view illustrating a change over time of a floating yeast count in a fermentation solution in the case of use of germinated yellow peas in the method of manufacturing a sparkling alcoholic beverage according to the embodiment of the present invention.
FIG. 4 is an explanatory view illustrating results of analysis of a pre-fermentation solution prepared by using germinated yellow peas in the method of manufacturing a sparkling alcoholic beverage according to the embodiment of the present invention.
FIG. 5 is an explanatory view illustrating results of analysis of a sparkling alcoholic beverage produced by using germinated yellow peas in the method of manufacturing a sparkling alcoholic beverage according to the embodiment of the present invention.
FIG. 6 is an explanatory view illustrating results of analysis of a pre-fermentation solution prepared by using germinated yellow peas at various use ratios in the method of manufacturing a sparkling alcoholic beverage according to the embodiment of the present invention.
FIG. 7 is an explanatory view illustrating results of analysis of a sparkling alcoholic beverage produced by using germinated yellow peas at various use ratios in the method of manufacturing a sparkling alcoholic beverage according to the embodiment of the present invention.
FIG. 8 is an explanatory view illustrating a NIBEM value of a sparkling alcoholic beverage produced by using germinated yellow peas at various use ratios in the method of manufacturing a sparkling alcoholic beverage according to the embodiment of the present invention.
FIG. 9 is an explanatory view illustrating concentrations of FAN and total protein contained in a pre-fermentation solution prepared by using germinated yellow peas at various use ratios in the method of manufacturing a sparkling alcoholic beverage according to the embodiment of the present invention.
FIG. 10 is an explanatory view illustrating chromaticities of a pre-fermentation solution and a sparkling alcoholic beverage obtained by using germinated yellow peas at various use ratios in the method of manufacturing a sparkling alcoholic beverage according to the embodiment of the present invention.
FIG. 11 is an explanatory view illustrating a correlation between the use ratio of germinated yellow peas in the method of manufacturing a sparkling alcoholic beverage according to the embodiment of the present invention and a concentration of isoamyl acetate contained in the produced sparkling alcoholic beverage.
FIG. 12 is an explanatory view illustrating a linear correlation between the use ratio of germinated yellow peas in the method of manufacturing a sparkling alcoholic beverage according to the embodiment of the present invention and the concentration of isoamyl acetate contained in the produced sparkling alcoholic beverage.
FIG. 13 is an explanatory view illustrating results of a sensory test of a sparkling alcoholic beverage produced by using germinated yellow peas at various use ratios in the method of manufacturing a sparkling alcoholic beverage according to the embodiment of the present invention.
FIG. 14 is an explanatory view illustrating results of analysis of a pre-fermentation solution prepared by using various germinated legumes in the method of manufacturing a sparkling alcoholic beverage according to the embodiment of the present invention.
FIG. 15 is an explanatory view illustrating results of analysis of a sparkling alcoholic beverage produced by using various germinated legumes in the method of manufacturing a sparkling alcoholic beverage according to the embodiment of the present invention.

### BEST MODES FOR CARRYING OUT THE INVENTION

A sparkling alcoholic beverage according to one embodiment of the present invention (hereinafter, referred to as "present beverage") and a method of manufacturing the same (hereinafter, referred to as "present manufacturing method") are described below. The present invention is not limited to the embodiment.

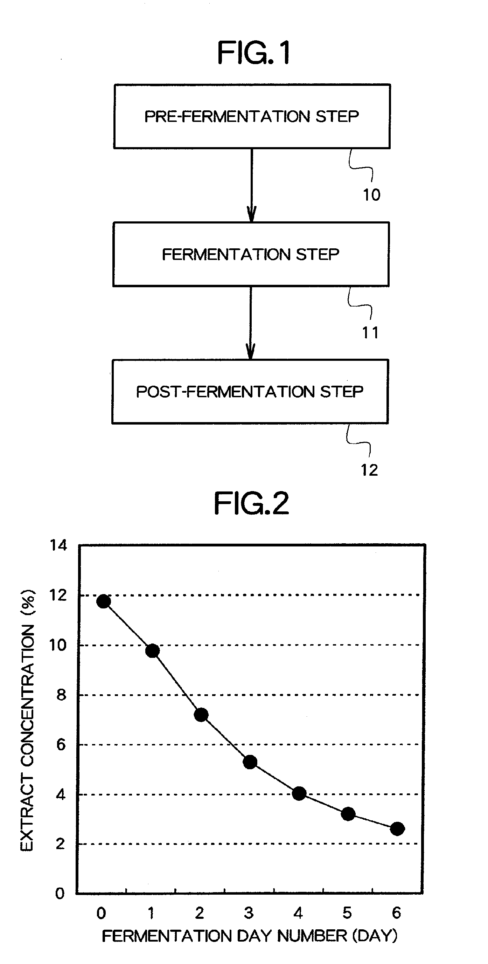

FIG. 1 is a flow chart illustrating main steps included in the present manufacturing method. As illustrated in FIG. 1, the present manufacturing method includes a pre-fermentation step 10 of preparing a pre-fermentation solution by using germinated yellow peas (Pisum Sativum L.)(hereinafter, referred to as "germinated yellow peas") without using hops as part of the raw materials, a fermentation step 11 of conducting the alcohol fermentation by adding a yeast to the pre-fermentation solution prepared in the pre-fermentation step 10, and a post-fermentation step 12 of performing a given treatment on a post-fermentation solution which has passed the fermentation step 11, thereby obtaining the present beverage.

In the pre-fermentation step 10, first, germinated yellow peas are prepared as part of the raw materials of the pre-fermentation solution. Specifically, germinated yellow peas are obtained by conducting a germination treatment of maintaining yellow peas under a given moist condition for a given period of time.

Specifically, germinated yellow peas may be obtained by, for example, immersing yellow peas in water of a given temperature for a given period of time (legume immersion treatment). The treatment conditions such as the temperature of water to be used in this legume immersion treatment and the legume immersion time (elapsed time from initiation of immersion of yellow peas in water) may be appropriately set depending on the production conditions such as properties to be imparted to the present beverage. For example, the temperature of water may be in the range of 0°C to 40°C and preferably in the range of 10°C to 20°C. The legume immersion time may be, for example, in the range of 1 hour to 48 hours and preferably in the range of 6 hours to 30 hours. The yellow peas after such legume immersion treatment may be used as the germinated yellow peas.

Further, the germinated yellow peas may also be obtained, for example, by performing the legume immersion treatment as described above on yellow peas, and additionally, performing a treatment of exposing the yellow peas to moist air having a given temperature for a given period of time. Specifically, in this case, for example, the yellow peas after the legume immersion treatment is placed on a floor surface in the form of a net and air having a humidity of 100% and a given temperature is fed from the lower side of the floor surface. The treatment conditions such as the temperature of this moist air and the blowing time (elapsed time from initiation of blowing of the moist air) may be appropriately set depending on the production conditions such as properties to be imparted to the present beverage. For example, the temperature of the moist air may be in the range of 0°C to 40°C, preferably in the range of 5°C to 20°C, and particularly preferably around 12°C. The blowing time may be, for example, 1 hour to 12 days, preferably 12 hours to 9 days, and further preferably 1 day to 6 days. By adjusting the blowing time to between 1 hour and 12 days, excellent properties such as flavor resulting from the use of germinated yellow peas maybe imparted sufficiently to the present beverage, and in the case of between 12 hours and 9 days, these properties may be further improved, and in the case of between 1 day and 6 days, these properties may be particularly preferable. Yellow peas which has undergone such a legume immersion treatment and moist air blowing may be used as the germinated yellow peas.

The present beverage produced by using germinated yellow peas does not have a leguminous odor, flour odor, and impure odor generated in the case of use of raw yellow peas which has not undergone the germination treatment instead of the germinated yellow peas, and simultaneously, is capable of obtaining an excellent ester aroma due to a synergistic effect of a flavor component specific to the yeast fermentation and a flavor component specific to the germinated yellow peas. In this case, the present beverage may obtain excellent properties specific to the germinated yellow peas, such as appropriate acidity and sweetness, clear and smooth taste, further improved foam-stability, and excellent crispness and drinkability.

It should be noted that the inventors of the present invention have further found that a legume other than the yellow peas may also be used in place of the yellow peas, as long as the legume may be germinated and then used as a part of raw materials for the pre-fermentation solution, to thereby impart properties such as flavors peculiar to the germinated legume to the beverage. That is, for example, the following can be used in place of the germinated yellow peas: a germinated product of at least one selected from the group consisting of soybeans, adzuki beans, black soybeans, mung beans, Taisho Kintoki beans, Tora beans, chickpeas, fava beans, mottled kidney beans, flower beans, lentils, and blue soybeans; and preferably a germinated product of soybeans, adzuki beans, black soybeans, mung beans, Taisho Kintoki beans, and mottled kidney beans.

The sparkling alcoholic beverage by using germinated soybeans as the germinated legume has reduced a astringent taste, other unpleasant tastes, and a harsh taste compared with the case of using raw soybeans which have not undergone the germination treatment, and has an ester aroma enhanced remarkably because of increase in the ester component concentration. In this case, the present beverage may obtain excellent properties specific to the germinated soybeans, such as increased crispness, excellent foam-stability, and mild and clear taste specific to the germinated soybeans.

The sparkling alcoholic beverage by using germinated adzuki beans as the germinated legume has a reduced astringent taste, reduced relatively-strong acidity, increased crispness, and an enhanced ester aroma compared with the case of using raw adzuki beans which have not undergone the germination treatment. In this case, the present beverage may obtain excellent properties specific to the germinated adzuki beans, such as excellent foam-stability, and excellent taste specific to the germinated adzuki beans.

The sparkling alcoholic beverage by using germinated black soybeans as the germinated legume has reduced a astringent taste and other unpleasant tastes, increased sweetness, increased crispness, and an enhanced ester aroma compared with the case of using raw black soybeans which have not undergone the germination treatment. In this case, the present beverage may obtain excellent properties specific to the germinated black soybeans, such as excellent foam-stability and mild taste specific to the germinated black soybeans.

The sparkling alcoholic beverage by using germinated mung beans as the germinated legume has reduced other unpleasant tastes and a harsh taste and appropriately increased acidity and sweetness compared with the case of using raw mung beans which have not undergone the germination treatment. In this case, the present beverage may obtain excellent properties specific to the germinated mung beans, such as excellent foam-stability, and clear taste specific to the germinated mung beans.

The sparkling alcoholic beverage by using germinated Taisho Kintoki beans as the germinated legume has reduced a astringent taste and a harsh taste increased crispness, and an enhanced ester aroma compared with the case of using raw Taisho Kintoki beans which have not undergone the germination treatment. In this case, the present beverage may obtain excellent properties specific to the germinated Taisho Kintoki beans, such as excellent foam-stability, and excellent sweetness and mild taste specific to the germinated Taisho Kintoki beans.

The sparkling alcoholic beverage by using germinated mottled kidney beans as the germinated legume has a thick taste, reduced wateriness, and an enhanced ester aroma compared with the case of using raw mottled kidney beans which have not undergone the germination treatment. In this case, the present beverage may obtain excellent properties specific to the germinated mottled kidney beans, such as excellent foam-stability, and mild taste specific to the germinated mottled kidney beans.

It should be noted that the sparkling alcoholic beverage to be produced by using the germinated yellow peas may have well-balanced and remarkable flavor properties compared with sparkling alcoholic beverages to be produced by using the above-mentioned other germinated legumes, and may have excellent properties peculiar to the germinated yellow peas as mentioned above.

In the pre-fermentation step 10, further, germinated yellow peas may also be roasted. In this case, the germinated yellow peas obtained as described above is dried, and further roasted. Specifically, the blowing temperature of dry air to the germinated yellow peas is gradually increased so that the temperature of the germinated yellow peas is gradually raised from around the temperature of the germination treatment up to between 50°C and 90°C. As a result, water in the germinated yellow peas may be sufficiently evaporated, and roasting by further heating and maintaining at between 50°C and 90°C for a given period of time may be carried out. In this roasting, it is also possible to boil the germinated yellow peas to carry out gelatinization of starch contained in the germinated yellow peas, and then to dry the germinated yellow peas after the boiling. Note that the germinated yellow peas obtained as described above may be milled and used preferably.

In the pre-fermentation step 10, nutrient sources for a yeast are prepared as part of the raw materials, in addition to the germinated yellow peas. That is, for example, a carbon source and a nitrogen source utilizable by a yeast are prepared.

The carbon source is not particularly restricted provided that it is utilizable by a yeast for the alcohol fermentation, and any sources may be selected and used. Specifically, there may be used, for example, fermentable sugars which are obtained by hydrolysis with a degrading enzyme or acid, of a starch extracted from cereals and are utilizable by a yeast. Specifically, there may be used purified sugars (for example, liquid or powder sugars including monosaccharides such as glucose and fructose and disaccharides such as maltose and sucrose) obtained by molecular weight reduction using a degrading enzyme such as amylase, and the like, of a starch extracted from corn, potato, rice, wheat, barley, or the like, and preferably, liquid sugars derived from corn may be used.

The nitrogen source is not particularly restricted provided that it is utilizable by a yeast for the alcohol fermentation, and any sources may be selected and used, and there may be used, for example, proteins and peptides extracted from cereals, and nitrogen-containing compounds obtained by hydrolysis thereof with a degrading enzyme or acid. Further, there may also be used amino acids and peptides obtained by molecular weight reduction with a degrading enzyme such as protease, of a protein extracted from beans such as yellow peas, soybeans, adzuki beans, black soybeans, mung beans, Taisho Kintoki beans, Tora beans, chickpeas, fava beans, mottled kidney beans, flower beans, lentils, and blue soybeans, and preferably, enzymatic degradation products of a pea-derived protein may be used.

Further, other materials effective for imparting, to the present beverage, desired properties such as coloration, impartment of flavor, improvement in foam-stability, improvement in the fermentation efficiency, and the like, or for improving the productivity of the present manufacturing method may be further used, if necessary, as part of the raw materials. Specifically, for example, caramel color may be used for imparting beer-like appearance or fragrant flavor to the present beverage, a protein may be used which is preferable for improving the foam-stability of the present beverage, and ammonium sulfate and a yeast extract may be used for improving the fermentation efficiency.

Note that by use of germinated yellow peas as part of the raw materials, the raw materials may also contain a carbon source which is utilizable by a yeast for the alcohol fermentation, a nitrogen source such as a protein, a peptide, and an amino acid, a protein for improving a foam-stability, and the like, which are derived from the germinated yellow peas. Therefore, in the present manufacturing method, it is not necessarily required to use malt as part of the raw materials. That is, in the present manufacturing method, the present beverage may be produced without using malt and hops, as part of the raw materials. In this case, properties resulting from germinated yellow peas may be induced particularly effectively.

In the pre-fermentation step 10, a pre-fermentation solution is prepared using at least germinated yellow peas, carbon source, nitrogen source, and water prepared as described above, and without using hops. That is, for example, germinated yellow peas, carbon source, and nitrogen source are dissolved at a given ratio in hot water having a given temperature, to prepare a pre-fermentation solution under antiseptic condition which is suitable for addition of a yeast in the fermentation step 11.

Here, the use ratio of germinated yellow peas contained in the raw materials may be determined arbitrarily depending on the property to be imparted to the present beverage, and for example, it may be remarkably smaller as compared with the use ratio of malt in production of a sparkling alcoholic beverage using malt as part of the raw materials, such as conventional beer.

Specifically, for example, the use ratio of germinated yellow peas may be in the range of 0.01 mass% to 0.35 mass%, preferably in the range of 0.05 mass% to 0.30 mass%, and particularly preferably in the range of 0.10 mass% to 0.15 mass%, in the raw materials.

That is, when the use ratio of germinated yellow peas is larger than 0. 35 mass% and when smaller than 0.01 mass%, properties specific to the germinated yellow peas may not be imparted to the beverage according to the present invention. In contrast, by adjusting the use ratio of germinated yellow peas in the range of 0.01 mass% to 0.35 mass%, properties such as a flavor specific to the germinated yellow peas may be imparted to the beverage according to the present invention. Further, when the use ratio of germinated yellow peas is in the range of 0. 05 mass% to 0.30 mass%, the beverage according to the present invention that has excellent flavor balance based on an ester odor and the like specific to the germinated yellow peas and has improved crispness and foam-stability, for example, may be produced. Still further, in particular, in the range of 0.10 mass% to 0.15 mass%, the beverage according to the present invention which has even better flavor balance specific to the germinated yellow peas, and has further improved crispness and foam-stability, and a clear and smooth taste, for example, may be produced.

As the carbon source and nitrogen source other than the germinated yellow peas, those which have been previously prepared mutually independently may also be used. That is, for example, in the pre-fermentation step 10, a carbon source and a nitrogen source purified mutually independently may be prepared respectively so as to be utilizable by a yeast, and the purified carbon source and the purified nitrogen source may be dissolved in hot water to prepare a pre-fermentation solution. In this case, in the pre-fermentation step 10, a pre-fermentation solution may be prepared without conducting a saccharification treatment which is carried out in beer brewing and the like.

When caramel color is used as part of the raw materials, the present beverage has not only chromaticity similar to beer, but also a specific fragrant flavor (roasting flavor) resulting from the caramel color, thus, a sparkling alcoholic beverage which is more preferable both in visual standpoint and taste standpoint may be obtained.

In the pre-fermentation step 10, a disinfection treatment may be further performed on a pre-fermentation solution prior to the fermentation step 11. That is, for example, after dissolution of the rawmaterials in hot water to prepare a pre-fermentation solution, the pre-fermentation solution is boiled by heating, thereby thermally sterilizing the pre-fermentation solution.

Here, in the present manufacturing method, because the pre-fermentation solution is prepared without using hops as part of the raw materials, it is not necessary to carry out an extraction treatment of components contained in the hop such as boiling of wort to be carried out before fermentation in a production process of beer. Therefore, in the boiling treatment in the pre-fermentation step 10, the temperature of the pre-fermentation solution may be raised quickly to the boiling temperature, after addition of the raw materials.

Specifically, in the boiling treatment of this pre-fermentation solution, raw materials including germinated yellow peas, carbon source, and nitrogen source are added into hot water having a given temperature, then, heating of this pre-fermentation solution is initiated quickly. The temperature of the pre-fermentation solution is increased quickly from around the original given temperature, and boiling of the pre-fermentation solution may be initiated within a short period of time from the addition of the raw materials. Thus, in the present manufacturing method, simplicity and efficiency may be improved as compared with conventional methods of producing beer and the like.

Further, the boiling conditions of the pre-fermentation solution may be the minimum required conditions for sterilizing the pre-fermentation solution. That is, for example, the boiling time of the pre-fermentation solution (for example, time from initiation of boiling until stop of heating) may be the minimum time for obtaining a disinfecting effect. Specifically, this boiling time may be appropriately adjusted depending on conditions such as the scale of a vessel to be used, the amount of the pre-fermentation solution, and composition thereof, and the like, and for example, it may be in the range of 1 minute to 60 minutes, preferably in the range of 5 minutes to 20 minutes.

As described above, in the present manufacturing method, the heating time and the boiling time of the pre-fermentation solution may be shortened remarkably as compared with conventional methods of producing beer and the like. As a result, in the present manufacturing method, the energy cost necessary for the production process may be reduced and the process time thereof may be shortened. In the present manufacturing method, the boiling conditions of the pre-fermentation solutionmaybe relaxed to a large extent as compared with conventional methods of producing beer and the like. Consequently, it is also possible to effectively avoid problems such as loss and degeneration of flavor component, protein and the like which may occur by elongation of boiling, while utilizing a merit of boiling that flavor component, protein, and the like contained in germinated yellow peas may be effectively extracted.

Note that the disinfection treatment of the pre-fermentation solution is not limited to the above-mentioned boiling treatments, and for example, irradiation of the pre-fermentation solution with ultraviolet ray, filtration of the pre-fermentation solution using a disinfection filter, and the like, may also be carried out. When the boiling treatment may be omitted in the pre-fermentation step 10 as described above, a boiling vessel may be omitted in the production facility, the energy cost may be reduced, further, loads on environments may also be reduced, as compared with conventional methods of producing beer and the like. Further, in the case of sterile preparation of a pre-fermentation solution by preparation of raw material under sterile condition such as use of sterile carbon source, and nitrogen source, and the like, the disinfection treatment of the pre-fermentation solution may also be omitted in the pre-fermentation step 10.

In the pre-fermentation step 10, the temperature of the pre-fermentation solution under sterile condition is adjusted in the range (for example, the range of 0°C to 40°C) suitable for addition of a yeast. Thus prepared pre-fermentation solution is subjected to the fermentation step 11.

In the fermentation step 11 following the pre-fermentation step 10, a yeast is added to a pre-fermentation solution prepared in the pre-fermentation step 10 and alcohol fermentation is carried out. Specifically, first, a yeast is added to the pre-fermentation solution adjusted in advance to a temperature in the suitable range to prepare a fermentation solution. After that, pre-fermentation is carried out by maintaining the fermentation solution containing the yeast at a given temperature for a given period of time. In this pre-fermentation, the yeast performs a metabolic action such as alcohol fermentation while consuming nutrient sources such as carbon sources and nitrogen sources contained in the pre-fermentation solution, to thereby produce ethanol, carbon dioxide gas, flavor components (such as ester), and the like.

The yeast is not particularly restricted provided that alcohol fermentation may be cariied out, and any kinds may be selectively used. Specifically, for example, beer yeasts such as bottom fermentation yeasts and top fermentation yeasts may be used, and preferably, bottom fermentation yeasts may be used.

The concentration of the yeast in the fermentation solution in initiation of the pre-fermentation may be in the range of 1×10⁶ cells/mL to 1×10⁹ cells/mL and preferably in the range of 1×10⁷ cells/mL to 1×10⁸ cells/mL. For example, when the concentration of the yeast in initiation of the pre-fermentation is higher than 1×10⁹ cells/mL, the foam-stability of the beverage to be finally obtained according to the present invention may be lowered and flavor balance may be not stabilized, and when the consentration is lower than 1×10⁶/mL, the fermentation time may be elongated and thus fermentation may not progress sufficiently.

The pre-fermentation may include what is called single fermentation accompanied by no saccharification, in the case where a pre-fermentation solution containing sufficient amounts of carbon sources and nitrogen sources which may be utilized by a yeast is prepared in the pre-fermentation step 10. Specifically, for example, in the case where there is prepared a pre-fermentation solution containing carbon sources and nitrogen sources in amounts necessary for conducting alcohol fermentation by a yeast by using germinated yellow peas, and purified carbon sources and purified nitrogen sources prepared mutually independently as part of the raw materials, there is no necessity to carry out a saccharification treatment as effected in beer brewing, in the fermentation step 11.

The temperature of the pre-fermentation may be appropriately adjusted depending on the kind of a yeast to be used and the concentration thereof in a fermentation solution. For example, the temperature may be in the range of 0°C to 40°C and preferably in the range of 6°C to 15°C.

In the fermentation step 11, post-fermentation (hereinafter, referred to as "alcohol storage") is carried out subsequently to the pre-fermentation. Specifically, for example, when a bottom fermentation yeast is used, a supernatant of a fermentation solution containing precipitated yeast after completion of the pre-fermentation is recovered, and the recovered supernatant is further maintained at a temperature in the range of -5°C to 30°C for a period of time in the range of 1 day to 60 days. By the alcohol storage, turbidity may be removed by causing precipitation of insoluble materials in the fermentation solution, and the flavor thereof may be improved by maturing. Further, in the alcohol storage, a carbon dioxide gas may also be further dissolved in the fermentation solution.

As described above, a post-fermentation solution containing ethanol, flavor component, and the like generated by a yeast may be obtained, in the fermentation step 11. The concentration of ethanol contained in the post-fermentation solution after the alcohol storage may be, for example, in the range of 1% to 20%, preferably 1% to 10%, more preferably 3% to 10%, and particularly preferably 4% to 6%.

In the post-fermentation step 12 subsequent to the fermentation step 11, the present beverage is finally obtained by subjecting a post-fermentation solution which has undergone the pre-fermentation and the alcohol storage in the fermentation step 11 to given treatment. That is, in this post-fermentation step 12, for example, living yeasts remaining in the post-fermentation solution are removed. Specifically, for example, yeasts contained in the post-fermentation solution are removed by filtering the post-fermentation solution using diatomaceous earth and the like. Further, for example, yeasts contained in the post-fermentation solution are annihilated by carrying out low temperature sterilization of maintaining the post-fermentation solution at a temperature of 60°C or higher for a period of 1 minute or longer, or high temperature sterilization of maintaining the post-fermentation solution at a higher temperature for a short period of time. In this post-fermentation step 12, the foaming property thereof may also be further improved by blowing a carbon dioxide gas into the post-fermentation solution.

The present beverage produced by the present manufacturing method as described above contains a lot of flavor components specific to brewed alcoholic beverage, such as flavor components generated by effective utilization of raw materials containing germinated yellow peas by a yeast, and the like. Specifically, the present beverage contains ethyl acetate, isoamyl acetate, ethyl caproate, ethyl caprylate, ethyl caprate, phenethyl acetate, caprylic acid, capric acid, and the like, and for example, 10.0 mg/L or more of ethyl acetate and 0.5 mg/L or more of isoamyl acetate may be contained, preferably, 15.0 mg/L or more of ethyl acetate and 0.7 mg/L or more of isoamyl acetate may be contained.

Further, the present beverage may also contain components specific to germinated yellow peas, in addition to those flavor components derived from fermentation. Specifically, the present beverage may include, for example, a sparkling alcoholic beverage excellent in total balance of flavors, having thick taste, and having properties specific to germinated yellow peas, by inclusion of flavor components derived from germinated yellow peas, and a component which imparts thick taste.

This well-balanced flavor property specific to the present beverage may not be obtained due to influences such as masking by hops, in a sparkling alcoholic beverage produced using, for example, hops as part of the raw materials. In other words, the present beverage is produced without using hops, and hence does not have bitterness and aroma specific to hops. Therefore, the present beverage is a sparkling alcoholic beverage having a remarkably specific flavor resulting from the use of germinated yellow peas, and capable of having an excellent flavor differing from conventional sparkling alcoholic beverages produced by using hops. Specifically, for example, the present beverage is capable of realizing clear taste differing from conventional sparkling alcoholic beverages produced by using hops, owing to appropriate acidity resulting from the use of germinated yellow peas.

In general, bitterness of beer derived from hops is evaluated as one of the features of beer, however, this relatively strong bitterness is not necessarily popular. Alternatively, sweetness may be imparted by addition of fruit juice, however, the sweetness of fruit juice is relatively persistent taste causing a feeling of adhesion to the throat, and thus, a clear feeling like beer may not be obtained easily. In contrast, according to the present manufacturing method in which germinated yellow peas are used without using hops, the present beverage having properties not conventionally found may be produced, the beverage having no strong bitterness but having thick taste, having appropriate sweetness which may likely be derived from a lot of ester components, and being capable of obtaining a clear feeling with well going down through throat.

The well balanced flavor property specific to the present beverage is still further remarkable when neither hop nor malt is used as part of the raw materials in the present manufacturing method. Specifically, in this case, the present beverage is a sparkling alcoholic beverage having a remarkably specific flavor resulting from the use of germinated yellow peas, and is capable of having an excellent flavor differing from conventional sparkling alcoholic beverages produced by using malt.

In the present manufacturing method, since a protein contained in germinated yellow peas may be utilized effectively, the foam-stability of the present beverage may be improved effectively, and the addition amount of substances for improving the foam-stability such as purified proteins which have conventionally been used as part of the raw materials may be reduced, or the addition of the substances for improving the foam-stability may be omitted. Thus, in the present manufacturing method, the filtration efficiency of a pre-fermentation solution may be improved, and as a result, the extract yield and purity of liquor quality of the present beverage may also be improved.

Further, in the present manufacturing method, pH of the pre-fermentation solution and the present beverage to be finally obtained may be maintained at higher level as compared with conventional methods of producing beer and the like using hops, and hence, for example, coloration due to the Maillard reaction and addition of caramel color may be carried out efficiently, and deterioration of flavor may be suppressed effectively.

A sparkling alcoholic beverage produced by using hops contains a polyphenol derived from the hop, and the polyphenol also has aspects of imparting bitterness while generating a precipitate by connecting to a polymer protein, which leads to a decrease in the foam-stability. In contrast, according to in the present manufacturing method, because hops is not used, the present beverage sufficiently utilizing excellent properties specific to germinated yellow peas may be produced, the beverage having well balanced flavors resulting from the use of germinated yellow peas, having thick taste, and having an excellent foam-stability.

Because hops is not used in the present manufacturing method, even if the present beverage is exposed to sunlight, it is obvious that a sunlight flavor, which is to be caused by degeneration of hop-derived components, may not be generated. Therefore, the present beverage is capable of effectively avoiding deterioration in quality due to storage and transportation which have been problems in conventional sparkling alcoholic beverages produced by using hops, and capable of stably maintaining properties specific to germinated yellow peas.

In relation to the present manufacturing method, the inventors of the present invention have found that the flavor property of a sparkling alcoholic beverage may be controlled according to the use amount of germinated yellow peas. That is, a method of controlling the flavor property of a sparkling alcoholic beverage (hereinafter, referred to as "present control method") is a method of controlling the flavor property of the sparkling alcoholic beverage by the use amount of the germinated yellow peas in a method of producing the sparkling alcoholic beverage including a preparation of a pre-fermentation solution by using germinated yellow peas without using hops as part of the raw materials and alcohol fermentation by adding a yeast to the pre-fermentation solution.

In the present control method, the flavor property of a sparkling alcoholic beverage which is to be actually produced is controlled based on a correlation between the use amount of germinated yellow peas and the flavor property which should be owned by the sparkling alcoholic beverage. As this correlation, for example, a regular (for example, linear) correlation between the use amount of germinated yellow peas and the flavor property of a sparkling alcoholic beverage may be preferably adopted. Specifically, in the present control method, for example, by varying the use amount of germinated yellow peas, based on calibration data showing a correlation between an index representing the use amount of germinated yellow peas and an index representing the flavor property of a sparkling alcoholic beverage (hereinafter, referred to as "flavor index"), the flavor property of the resultant sparkling alcoholic beverage may be varied according to the use amount of the germinated yellow peas.

As the index representing the use amount of germinated yellow peas, for example, there may be used a proportion of the use amount of germinated yellow peas necessary for obtaining an unit amount of raw materials or raw material solutions (pre-fermentation solution, fermentation solution, post-fermentation solution, and the like) to be used in any stage during the process of producing a sparkling alcoholic beverage, or of the sparkling alcoholic beverage to be finally obtained, with respect to the unit amount. This proportion is not particularly restricted provided that it is in the range in which a correlation between the use amount of germinated yellow peas and the flavor index is experimentally or theoretically obtained.

Specifically, as the index representing the use amount of germinated yellow peas, for example, the use ratio (for example, represented by mass%) of germinated yellow peas included in the raw materials in a pre-fermentation solution may be used. This use ratio of germinated yellow peas is not particularly restricted provided that it is in the range in which a correlation between the use ratio and the flavor index can be experimentally or theoretically obtained in advance, and for example, it may be in the range of 0.01 mass% to 0.35 mass% and preferably in the range of 0.05 mass% to 0.30 mass%. That is, as a result of pursuing unique studies, the inventors of the present invention have found that there is a linear relation between the use ratio and the flavor index when the use ratio of germinated yellow peas is in the range of 0.01 mass% to 0.35 mass%. In this case, a sparkling alcoholic beverage having a flavor property which is specific to germinated yellow peas may also be obtained, as described above. Therefore, in the present control method, when the use ratio of germinated yellow peas is in the range of 0.01 mass% to 0.35 mass%, the flavor property of a sparkling alcoholic beverage specific to germinated yellow peas can be effectively controlled by the above-mentioned use ratio.

The flavor index is not particularly restricted and may be determined arbitrarily provided that there may be obtained an index representing the flavor property of raw material solutions (pre-fermentation solution, fermentation solution, post-fermentation solution, and the like) prepared in any stage during the process of producing a sparkling alcoholic beverage or the present beverage to be finally obtained. For example, the flavor index may correspond to the concentration of ester components contained in the sparkling alcoholic beverage. That is, for example, at least one of the concentration of at least one ester component contained in a sparkling alcoholic beverage or the total concentration obtained by totalizing the respective concentrations may be used as the flavor index.

The kind of the ester component is not particularly restricted provided that it contributes to the flavor property of raw material solutions (pre-fermentation solution, fermentation solution, post-fermentation solution, and the like) prepared in any stage during the process of producing a sparkling alcoholic beverage or the finally obtainable sparkling alcoholic beverage. For example, there may be employed an ester component generated by a yeast or an ester component derived from germinated yellow peas. Specifically, for example, the ester component may include at least one ester component selected from the group consisting of isoamyl acetate, ethyl acetate, ethyl caproate, ethyl caprylate, ethyl caprate, phenethyl acetate, caprylic acid, and capric acid, and preferably, there may be included at least one of isoamyl acetate or ethyl acetate.

The calibration data may be obtained by investigating, prior to actual production of a sparkling alcoholic beverage, variation in the flavor property of a sparkling alcoholic beverage caused by variation of the use amount of germinated yellow peas. Specifically, for example, first, a pre-fermentation solution is prepared by using germinated yellow peas at a given use ratio with respect to the raw materials without using hops as part of the raw materials, a yeast is added to the pre-fermentation solution and the alcohol fermentation is carried out, and this sparkling alcoholic beverage manufacturing method is carried out a plurality of times using germinated yellow peas at a plurality of mutually different use ratios, and the concentration of ester components contained in the sparkling alcoholic beverage produced at each use ratio is measured. Based on this measurement result, calibration data may be obtained in which each use ratio and the ester concentration measured at each use ratio are associated with each other, for the plurality of use ratios of germinated yellow peas.

Specifically, the calibration data may be expressed as a data table or function, and the like, showing a relation between the use ratio of germinated yellow peas and the ester concentration. The use ratio of germinated yellow peas and the ester concentration in the calibration rate may be determined in a given range. The plurality of use ratios to be used for creating the calibration data may be, for example, in the range of 0.01 mass% to 0.35 mass%, in the range of 0.05 mass% to 0.35 mass%, in the range of 0.05 mass% to 0.30 mass%, or in the range of 0.10 mass% to 0.30 mass%, as described above.

Referring to the calibration data described above, the use amount of germinated yellow peas which is necessary for production of a sparkling alcoholic beverage having a given flavor property may be simply determined. That is, for example, when producing a sparkling alcoholic beverage containing a specific ester component in a given concentration or concentration range, first, in calibration data previously obtained experimentally or theoretically using the concentration of the specific ester component as the flavor index, the use ratio of germinated yellow peas which is associated with the given concentration or concentration range is determined.

Then, a pre-fermentation solution is prepared by using germinated yellow peas at the use ratio determined based on the calibration data without using hops as part of the raw materials, and a yeast is added to the pre-fermentation solution to carry out the alcohol fermentation, with the result that a sparkling alcoholic beverage having the flavor property corresponding to the use ratio maybe produced. The present control method may also include a method of controlling the flavor property in a method of manufacturing a sparkling alcoholic beverage not using malt and hops as part of the raw materials.

As described above, according to the present control method, the flavor property of a sparkling alcoholic beverage may be controlled by changing the use amount of germinated yellow peas. In particular, by using the calibration data as described above, a sparkling alcoholic beverage having a desired flavor property may be produced simply and reliably without conducting vast amounts of trials and errors which have been conventionally necessary.

It should be noted that the inventors of the present invention have found that a legume other than the yellow peas may also be used in place of the yellow peas, as long as the flavor properties of the sparkling alcoholic beverages can be controlled according to a use amount of the legume. That is, for example, the following can be used in place of the germinated yellow peas: a germinated product of at least one selected from the group consisting of soybeans, adzuki beans, black soybeans, mung beans, Taisho Kintoki beans, Tora beans, chickpeas, fava beans, mottled kidney beans, flower beans, lentils, and blue soybeans; and preferably a germinated product of soybeans, adzuki beans, black soybeans, mung beans, Taisho Kintoki beans, and mottled kidney beans.

Next, examples according to the present beverage, the present manufacturing method, and the present control method are described. In the examples, a brewing facility of a few liter (L) scale was used.

### [Example 1]

In Example 1, a sparkling alcoholic beverage was produced by preparing a pre-fermentation solution using germinated yellow peas without using hops as part of the raw materials, and adding a yeast to the pre-fermentation solution to carry out the alcohol fermentation.

That is, first, raw yellow peas which had not undergone a germination treatment was immersed in water of 15°C for 24 hours, then, wind blown by moist air of 12°C for 3 days to cause germination thereof. Further, the germinated yellow peas were roasted for 3 hours under an environment under a temperature raised to 84 °C from room temperature. The germinated yellow peas after the roasting were milled using a milling apparatus (malt mill, manufactured by Jertin Aseson & Company) to prepare milled germinated yellow peas.

As another part of the raw materials, purified carbon source and nitrogen source were prepared. That is, corn-derived liquid sugar (corn syrup S75, manufactured by Nihon Cornstarch corporation) and an enzymatic decomposed product of a protein extracted from non-germinated yellow peas (yellow peas protein PP-CS, manufactured by Parrheim Foods) were prepared as the main carbon source and nitrogen source, respectively.

Into a charging tank with a capacity of 3.9 L was added 1 L of hot water of 80°C, 3.9 g of milled germinated yellow peas, 600 g of liquid sugar, 46 g of yellow peas protein decomposed product and 1.9 g of caramel color (Powder Caramel SF, manufactured by Ikedatohka Industries Co. , Ltd.), and these raw materials were mixed. After that, to this mixed solution was further added hot water of 80°C, to prepare 3.9 L of a raw material solution having an extract concentration of about 12%. The concentration of the milled germinated yellow peas in this raw material solution was 1,000 ppm (parts per million) (namely, 1 g/L, about 0.1 mass%).

Next, by a heater equipped to the charging tank, the rawmaterial solution in the charging tank was heated to boil. 20 minutes after initiation of boiling of the raw material solution, heating by the heater was stopped. Water was added to the raw material solution after boiling so as to adjust the extract concentration to 11.8%, to thereby obtain a pre-fermentation solution. This pre-fermentation solution was cooled down to 10°C, and then 2.5 L of the solution was transferred to a fermentation tank.

In the fermentation tank, a bottom fermentation beer yeast was added to the pre-fermentation solution so as to give a concentration of 3×10⁷ cells/mL, to thereby initiate pre-fermentation. The pre-fermentation was carried out at 14°C for 5 days, and then the supernatant of the fermentation solution was recovered. 2.0 L of this supernatant was transferred to an alcohol storage tank.

In the alcohol storage tank, the transferred fermentation solution was cooled down to -1°C and maintained for 3 weeks, to thereby perform alcohol storage. The post-fermentation solution after completion of the alcohol storage was filtrated using diatomaceous earth so as to remove the yeast in the post-fermentation solution, to thereby obtain a sparkling alcoholic beverage.

In Example 1, a sparkling alcoholic beverage was produced according to a method in which raw yellow peas which had not undergone a germination treatment were used instead of germinated yellow peas, in the same manner as the above-mentioned method in which germinated yellow peas are used. Also in this case, the concentration of the milled raw yellow peas in the raw material solution of the pre-fermentation solution was 1,000 ppm.

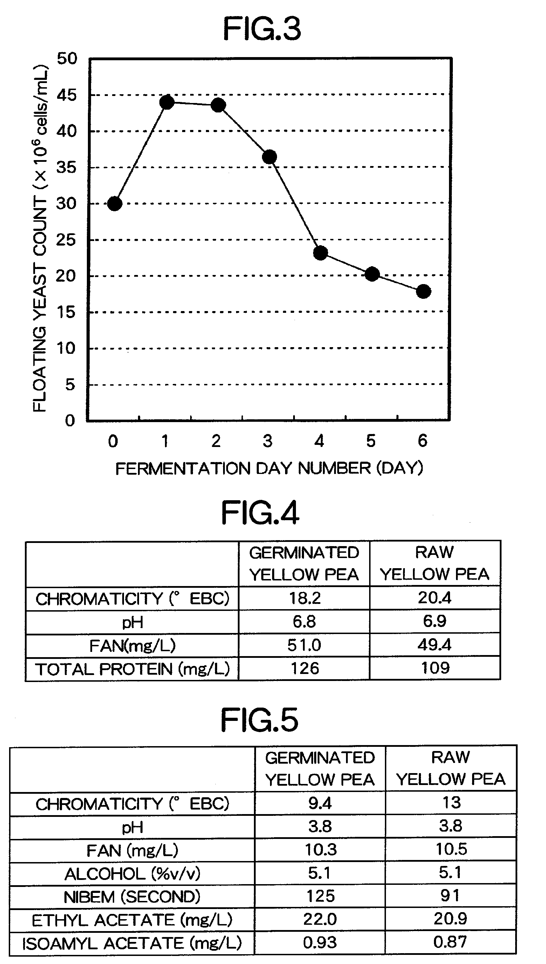

FIGS. 2 and 3 illustrate examples of change over time of the extract concentration and the floating yeast count in the fermentation solution, in the pre-fermentation using germinated yellow peas. Those extract concentration and floating yeast count were identified by analyzing a part of the fermentation solution collected at each time.

In FIG. 2, the abscissa represents the fermentation day count (day) showing the elapsed days after addition of a yeast to the pre-fermentation solution, and the ordinate represents the extract concentration (%) showing the extract amount (g) per 100 g of the fermentation solution, respectively. As illustrated in FIG. 2, the extract concentration in the pre-fermentation lowered gradually from 11.8 (%) at the initiation of fermentation, reaching 2.6 (%) on 6th day of fermentation. The pre-fermentation was completed on the 6th day of fermentation when the extract concentration decreased to below 3.0 (%).

In FIG. 3, the abscissa represents the fermentation day count (day) and the ordinate represents the floating yeast count (×10⁶ cells) per 1 mL of the fermentation solution, respectively. As illustrated in FIG. 3, the floating yeast count in the pre-fermentation increased until the 2nd day after the initiation of fermentation, and thereafter, decreased gradually. From the results illustrated in FIGS. 2 and 3, it was confirmed that bottom fermentation progressed successfully in the case of use of germinated yellow peas without using hops as part of the raw materials.

FIG. 4 illustrates the results of analysis of the chromaticity (in EBC unit), pH, free amino acid nitrogen (FAN) concentration (mg/L), and total protein concentration (mg/L), for the pre-fermentation solution prepared using germinated yellow peas or raw yellow peas. The chromaticity was calculated based on the absorbance of each pre-fermentation solution at 430 nm measured using a spectral photometer (U3210, manufactured by Hitachi, Ltd.) according to the EBC method. The FAN concentration was measured according to the EBC method.

As illustrated in FIG. 4, both the FAN concentration and the total protein concentration of the pre-fermentation solution were higher in the case of use of germinated yellow peas as compared with the case of use of raw yellow peas. That is, it was identified that the pre-fermentation solution prepared using germinated yellow peas contained FAN and total protein in large amounts.

FIG. 5 illustrates the results of analysis of the chromaticity (in EBC unit), pH, FAN concentration (mg/L), alcohol concentration (%) showing the vol% of ethanol, NIBEM value (second) showing the foam-stability, and concentrations (mg/L) of ethyl acetate and isoamyl acetate which are ester components known to be generated by a yeast, for the sparkling alcoholic beverage produced using germinated yellow peas or raw yellow peas. The concentrations of ethyl acetate and isoamyl acetate were analyzed using gas chromatography (HP6890, manufactured by Agilent Technologies, Inc.).

As illustrated in FIG. 5, the concentrations of ethyl acetate and isoamyl acetate contained in the sparkling alcoholic beverage were higher in the case of use of germinated yellow peas as compared with the case of use of raw yellow peas. That is, it was identified that the sparkling alcoholic beverage produced using germinated yellow peas is rich in at least ester components specific to brewed alcoholic beverage. From the results of the NIBEM value, it was confirmed that the foam-stability is improved in the case of use of the germinated yellow peas as compared with the case of use of the raw yellow peas.

Further, for the sparkling alcoholic beverage finally obtained, a sensory test was carried out by 6 skilled panelists. As a result, the sparkling alcoholic beverage produced using germinated yellow peas had an excellent ester aroma, a clear and smooth taste, in addition to appropriate acidity and sweetness, and manifested excellent crispness (after taste) and a feeling of going down through the throat. That is, the overall evaluation thereof was extremely excellent. In contrast, the sparkling alcoholic beverage produced using raw yellow peas had a leguminous odor and a flour odor, which results in an impure flavor, that is, crispness and a feeling of going down through the throat were evaluated to be inferior as compared with the case of use of the germinated yellow peas.

The ester aroma specific to germinated yellow peas evaluated as an excellent property in the sensory test may likely be a property obtained by the synergistic action of flavor component specific to brewed alcoholic beverage such as the ester component and the like illustrated in FIG. 5 and a specific flavor component resulting from germinated yellow peas. The clear and smooth taste and excellent crispness and the feeling of going down through the throat obtained in the case of use of germinated yellow peas may likely be properties obtained by an increased thick taste due to well balanced flavors specific to germinated yellow peas, in addition to the presence of various components illustrated in FIG. 5.

As described above, the sparkling alcoholic beverage produced by preparing a pre-fermentation solution using germinated yellow peas without using malt and hops as part of the raw materials, adding a yeast to the pre-fermentation solution and carrying out the alcohol fermentation was confirmed to have properties such as an excellent flavor and the like, which are not conventionally found. This may likely be a result of sufficient utilization of properties derived from germinated yellow peas, because the germinated yellow peas are used without using hops.

### [Example 2]

In Example 2, the use ratio of germinated yellow peas included in the raw materials in a pre-fermentation solution was varied, and it was investigated how the property of the sparkling alcoholic beverage produced at each use ratio changed. That is, a plurality of sparkling alcoholic beverages were produced by preparing a plurality of pre-fermentation solutions using germinated yellow peas at a plurality of mutually different use ratios without using hops as part of the raw materials, and adding a yeast to each pre-fermentation solution and carrying out the alcohol fermentation.

The use ratio of germinated yellow peas included in the raw materials of the pre-fermentation solution was adjusted to 8 levels: 0 ppm (0.000 mass%, namely, no use of the germinated yellow peas); 50 ppm (0.005 mass%); 100 ppm (0.010 mass%); 500 ppm (0.050 mass%); 1,000 ppm (0.100 mass%); 3,000 ppm (0.300 mass%); 3,500 ppm (0.350 mass%); and 4, 000 ppm (0.400 mass%) The same manufacturing method as in Example 1 described above was carried out at the respective use ratios, to produce 8 kinds of sparkling alcoholic beverages.

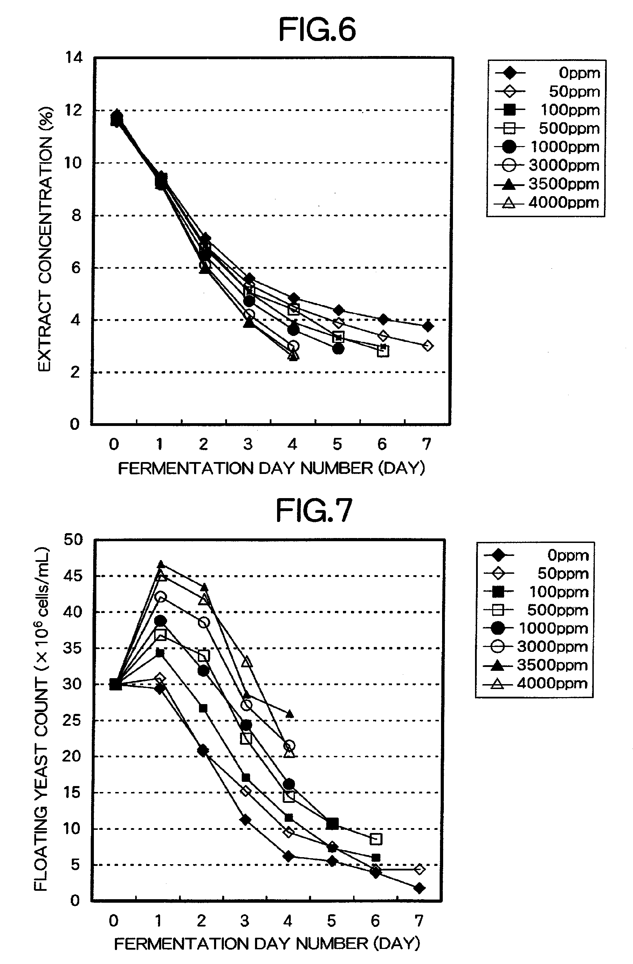

FIGS. 6 and 7 illustrate examples of change over time of the extract concentration and the floating yeast count in the fermentation solution in each pre-fermentation in the case of use of germinated yellow peas at the 8 kinds of use ratios. In FIG. 6, the abscissa represents the fermentation day count (day) and the ordinate represents the extract concentration, respectively. In FIG. 7, the abscissa represents the fermentation day count (day) and the ordinate represents the floating yeast count (×10⁶) per 1 mL of the fermentation solution, respectively. In FIGS. 6 and 7, the black solid rhomboidal mark represents the result in the case of adoption of the use ratio of 0 ppm, the white outlined rhomboidal mark for 50 ppm, the black solid rectangular mark for 100 ppm, the white outlined rectangular mark for 500 ppm, the black solid round mark for 1,000 ppm, the white outlined round mark for 3,000 ppm, the black solid triangular mark for 3, 500 ppm, and the white outlined triangular mark for 4,000 ppm, respectively.

As illustrated in FIGS. 6 and 7, it was identified that bottom fermentation progressed successfully when the use ratio of germinated yellow peas was larger than 50 ppm. Further, it was confirmed that with the increase in the use ratio of germinated yellow peas, proliferation and a metabolic action of a yeast in the fermentation solution were promoted. The pre-fermentation was carried out for 4 days when the use ratio of germinated yellow peas was 3,000 ppm, 3,500 ppm, and 4,000 ppm, 5 days when the use ratio was 1,000 ppm, 6 days when the use ratio was 100 ppm and 500 ppm, and 7 days when the use ratio was 0 ppm and 50 ppm, respectively.

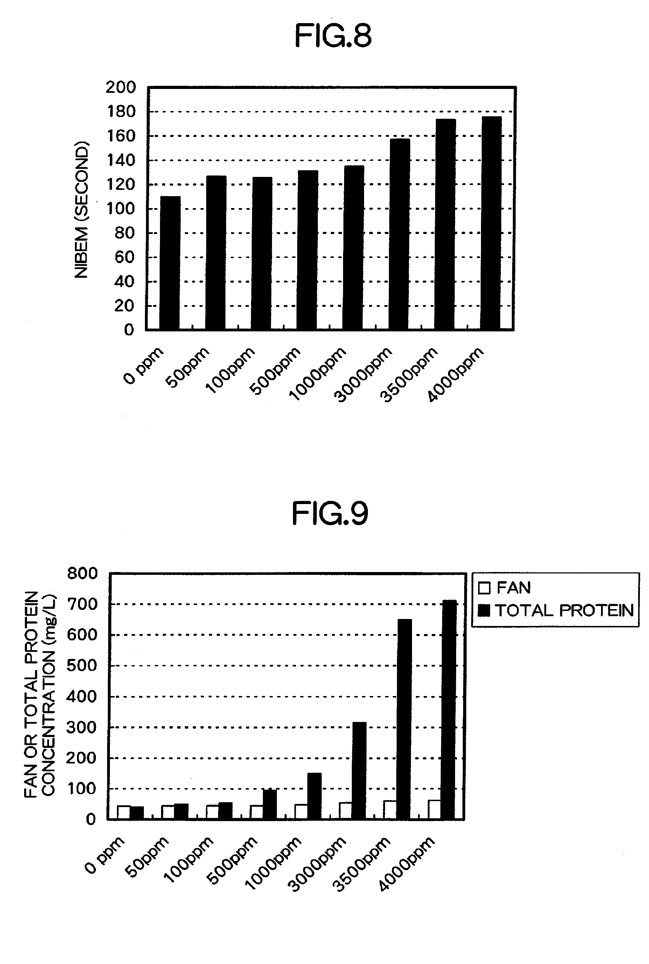

FIG. 8 illustrates one example of the results of measurement of the NIBEM value showing the foam-stability of the sparkling alcoholic beverage finally obtained. In FIG. 8, the abscissa represents the use ratio (ppm) of germinated yellow peas and the ordinate represents the NIBEM value (second), respectively. As illustrated in FIG. 8, it was confirmed that the foam-stability of the sparkling alcoholic beverage to be produced was excellent at any of the use ratios. Further, it was confirmed that with the increase in the use ratio, the NIBEM value also tended to increase.

FIG. 9 illustrates one example of the results of measurement of the FAN concentration and total protein contained in the pre-fermentation solution. In FIG. 9, the abscissa represents the use ratio (ppm) of germinated yellow peas and the ordinate represents the concentration (mg/L) of FAN or total protein, respectively. The white outlined bar represents the FAN concentration and the black solid bar represents the total protein concentration, respectively. As illustrated in FIG. 9, it was confirmed that with the increase in the use ratio, the total protein concentration also tended to increase. On the other hand, the increase in the FAN concentration owing to the increase in the use ratio was mild as compared with the total protein concentration.

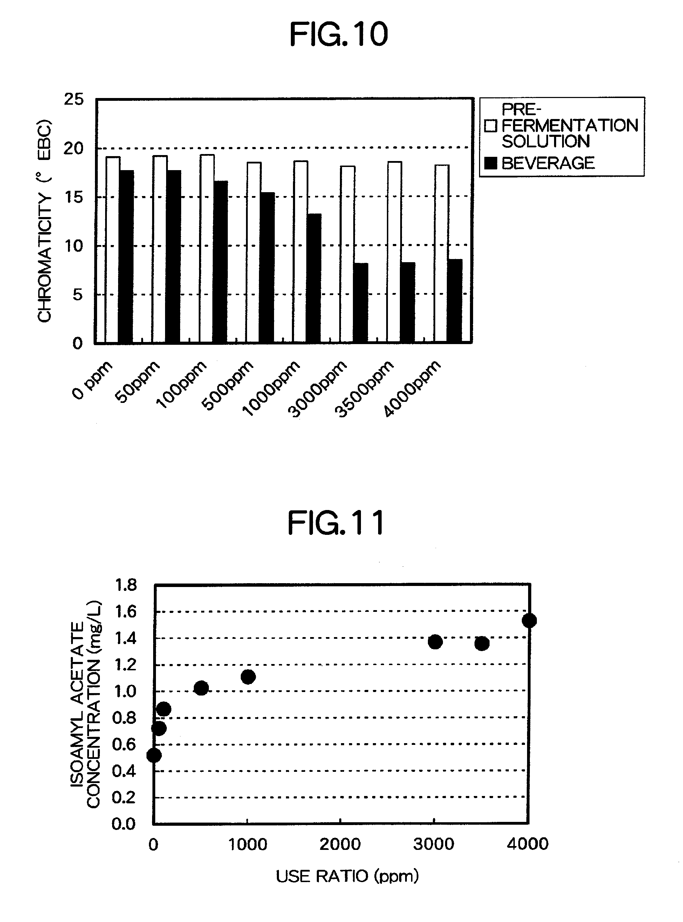

FIG. 10 illustrates one example of the results of measurement of the chromaticity of the pre-fermentation solution and the sparkling alcoholic beverage finally obtained. In FIG. 10, the abscissa represents the use ratio (ppm) of germinated yellow peas and the ordinate represents the chromaticity (°EBC), respectively. The white outlined bar represents the measurement result of the pre-fermentation solution and the black solid bar represents the measurement results of the beverage (sparkling alcoholic beverage), respectively. As illustrated in FIG. 10, the chromaticity of the pre-fermentation solution hardly depended on the use ratio. In contrast, the chromaticity of the sparkling alcoholic beverage increased with the increase in the use ratio. Though the reasons for the decrease in chromaticity is unclear, color adsorption by the yeasts of which proliferation is promoted with the increase in the use ratio is likely to be one of the reasons.

As a result of measurement of pH of the pre-fermentation solution prepared at each use ratio, pH of the pre-fermentation solution exhibited a tendency of slight increase in the range of 6.70 to 7.00, along with the increase in the use ratio. As a result of measurement of pH of the sparkling alcoholic beverage prepared at each use ratio, pH of the sparkling alcoholic beverage exhibited a tendency of slight increase in the range of 3.75 to 4.00, along with the increase in the use ratio.

FIG. 11 illustrates one example of the results of measurement of isoamyl acetate contained in each of the 8 kinds of sparkling alcoholic beverages finally obtained. In FIG. 11, the abscissa represents the use ratio (ppm) of germinated yellow peas and the ordinate represents the isoamyl acetate concentration (mg/L), respectively. As illustrated in FIG. 11, the isoamyl acetate concentration increased steeply in the range of use ratio from 0 ppm to 100 ppm, and increased gradually in the range of use ratio from 100 ppm to 4, 000 ppm. Specifically, in the range of use ratio from 0 ppm to 100 ppm, the isoamyl acetate concentration increased linearly with the increase in the use ratio with a first inclination, and in the range of use ratio from 100 ppm to 4,000 ppm, the isoamyl acetate concentration increased linearly with increase in the use ratio with a second inclination which is smaller than the first inclination.

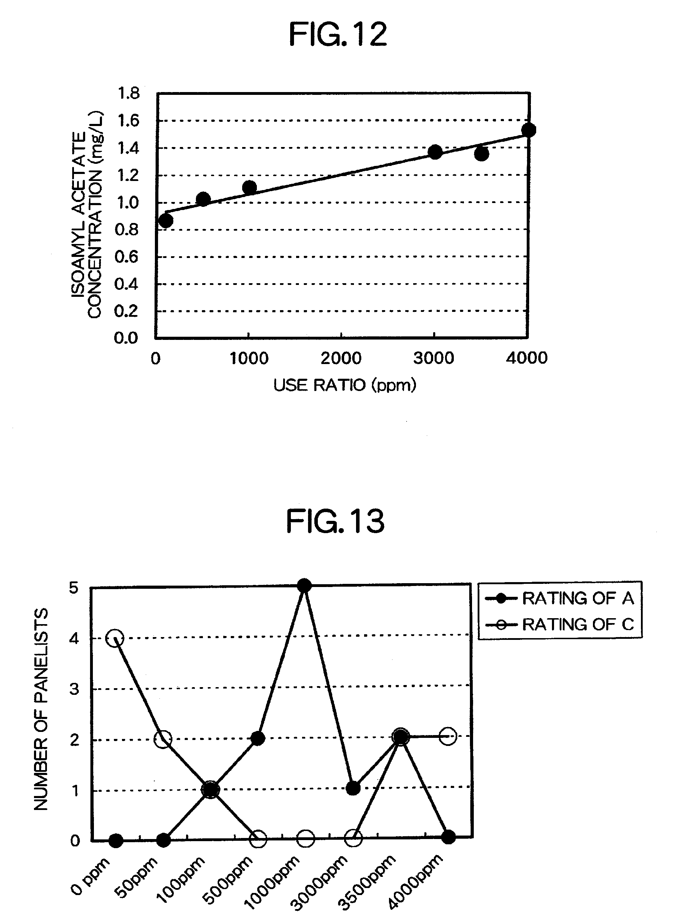

FIG. 12 illustrates one example of straight-line approximation of plots of the data of 6 points extracted from the data of 8 point plots illustrated in FIG. 11, in the range of 100 ppm to 4,000 ppm, that is, at 100 ppm, 500 ppm, 1,000 ppm, 3,000 ppm, 3,500 ppm, and 4,000 ppm. In FIG. 12, the abscissa represents the use ratio (ppm) of germinated yellow peas and the ordinate represents the isoamyl acetate concentration (mg/L), respectively. As illustrated in FIG. 12, in the range of use ratio from 100 ppm to 4,000 ppm, the use ratio and the isoamyl acetate concentration exhibited an excellent linear correlation. The correlation coefficient (R2) in this straight-line approximation was 0.96.

By varying the use ratio of germinated yellow peas based on the calibration data showing a correlation between the use ratio of the germinated yellow peas and the isoamyl acetate concentration as illustrated in FIGS. 11 and 12, the concentration of isoamyl acetate contained in the sparkling alcoholic beverage may be controlled simply and reliably. In particular, as illustrated in FIG. 12, when there is established a linear correlation between the use ratio and the isoamyl acetate concentration in the range of the use ratio in which an excellent property may be imparted to a sparkling alcoholic beverage, it is possible to simply determine the use ratio of germinated yellow peas necessary for production of a sparkling alcoholic beverage containing isoamyl acetate in a desired concentration. By use of germinated yellow peas at the determined use ratio, a sparkling alcoholic beverage containing isoamyl acetate in the desired concentration may be produced with reliability.

Further, for each of the 8 kinds of sparkling alcoholic beverages, a sensory test was carried out by 5 skilled panelists. As a result, the sparkling alcoholic beverages obtained in the case of no use of germinated yellow peas (the use ratio is 0 ppm) and when the use ratio of germinated yellow peas was 50 ppm had a strong sulfur odor and a sulfide odor, while having an astringent taste and a harsh taste, and an after taste thereof was poor in crispness. On the other hand, the sparkling alcoholic beverage obtained when the use ratio of germinated yellow peas was 4,000 ppm had a slight ester aroma resulting from the use of germinated yellow peas, however, had a harsh taste and other unpleasant tastes, and an after taste thereof was poor in crispness.

In contrast, the sparkling alcoholic beverages obtained when the use ratio of germinated yellow peas was in the range of 100 ppm to 3, 500 ppm (0.010 mass% to 0.350 mass%) hadpreferableproperties specific to germinated yellow peas. That is, the sparkling alcoholic beverage obtained when the use ratio of germinated yellow peas was 100 ppm had a slight sulfur odor, however, had appropriate acidity and sweetness, and was excellent in crispness. The sparkling alcoholic beverage obtained when the use ratio of germinated yellow peas was 500 ppm had an ester aroma resulting from the use of germinated yellow peas, and had appropriate acidity and sweetness, and was excellent in crispness. The sparkling alcoholic beverage obtained when the use ratio of germinated yellow peas was 1,000 ppm had a remarkable specific ester aroma resulting from the use of germinated yellow peas, and had appropriate sweetness, and was extremely excellent in crispness, while having a clear after taste. The sparkling alcoholic beverage obtained when the use ratio of germinated yellowpeas was 3, 000 ppm had a slight harsh taste, however, had a specific ester aroma resulting from the use of germinated yellow peas, and was excellent in crispness. The sparkling alcoholic beverage obtained when the use ratio of germinated yellow peas was 3, 500 ppm had a harsh taste, other unpleasant tastes, andanastringent taste and was poor in crispness, however, had a specific ester aroma resulting from the use of germinated yellow peas.

FIG. 13 illustrates one example of the results of overall evaluation on a three-point scale of A, B, and C (A indicates the highest rating) for 8 kinds of sparkling alcoholic beverages, in this sensory test. In FIG. 13, the abscissa represents the use ratio (ppm) of germinated yellow peas and the ordinate represents the number of panelists (person) giving a rating of A or a rating of C, respectively. The black solid round mark represents the number of persons giving a rating of A, and the white outlined round mark represents the number of persons giving a rating of C, respectively.

As illustrated in FIG. 13, when the use ratio of germinated yellow peas was 0 ppm, 50 ppm, 4,000 ppm, there was no panelist giving a rating of A. When the use ratio of germinated yellow peas was 100 ppm and 3,500 ppm, there were one and two panelists giving a rating of A, respectively, while there were one and two panelists giving a rating C, which means that the number of panelists giving a rating of A is equal to the number of panelists giving a rating of C.

In contrast, when the use ratio of germinated yellow peas was 500 ppm, 1, 000 ppm, 3, 000 ppm, there was no panelist giving a rating C. In this case, the number of panelists giving a rating of A was one for 3,000 ppm and two for 500 ppm, and in the case of 1,000 ppm, all the 5 panelists gave a rating of A. In the case of production of a sparkling alcoholic beverage using germinated yellow peas without using malt and hops as part of the raw materials, as described above, a particularly high evaluation was received when the use ratio of the germinated yellow peas was in the range of 500 to 3, 000 ppm.

### [Example 3]

In Example 3, it was investigated whether or not a sunlight flavor is generated when irradiated with sunlight in a sparkling alcoholic beverage produced using germinated yellow peas by the same manufacturing method as in Example 1. That is, first, a sparkling alcoholic beverage was produced by preparing a pre-fermentation solution using germinated yellow peas germinated for 3 days at a ratio of 1,000 ppm with respect to raw materials, without using hops, as part of the raw materials, and adding a yeast to the pre-fermentation solution and carrying out the alcohol fermentation.

A part of this sparkling alcoholic beverage was poured into a brown vessel, and left outdoors over a period of one week. The vessel containing the sparkling alcoholic beverage was exposed to strong sunlight during daytime for at least 20 hours in the one week. The temperature of the sparkling alcoholic beverage during the standing period was in the range of 15°C to 40°C.

For the sparkling alcoholic beverage before being irradiated with sunlight and the sparkling alcoholic beverage after being left outdoors in the vessel for one week, the content of 3-methyl-2-butene-1-thiol was measured. 3-methyl-2-butene-1-thiol is a substance generated by photo-degradation of isohumulone extracted from hops. 3-methyl-2-butene-1-thiol is believed to be a main causative substance for a so-called sunlight flavor, which is generated when a sparkling alcoholic beverage such as beer, and the like produced by using hops is exposed to sunlight, and its threshold value is said to be 5 ppt (parts per trillion).

As a result of measurement, the concentration of 3-methyl-2-butene-1-thiol was 2 ppt for the sparkling alcoholic beverage before being irradiated with sunlight, and 3 ppt for the sparkling alcoholic beverage after being irradiated with sunlight. That is, it was confirmed that a sunlight flavor is not generated in this sparkling alcoholic beverage, even if it undergoes irradiation of sunlight for a long period of time during storage.

### [Example 4]

In Example 4, 14 kinds of sparkling alcoholic beverages were produced using any one of 7 kinds of legumes including soybeans, adzuki beans, black soybeans, mung beans, Taisho Kintoki beans, mottled kidney beans, and blue soybeans, instead of the yellow peas, by the same manufacturing method as in Example 1. Like in Example 1, the legumes were immersed in water and windblown by moist air for 3 days so as to be used as the germinated legume, while the lugumes which had not undergone a germination treatment were used as raw lugumes.

That is, 14 kinds of sparkling alcoholic beverages were produced by preparing 14 kinds of pre-fermentation solutions using 7 kinds of germinated legumes or 7 kinds of raw legumes at a ratio of 1, 000 ppm with respect to the raw materials, without using hops, as part of the raw materials, and adding a yeast to each pre-fermentation solution and carrying out the alcohol fermentation. All of the germinated legumes and raw legumes were milled before use.

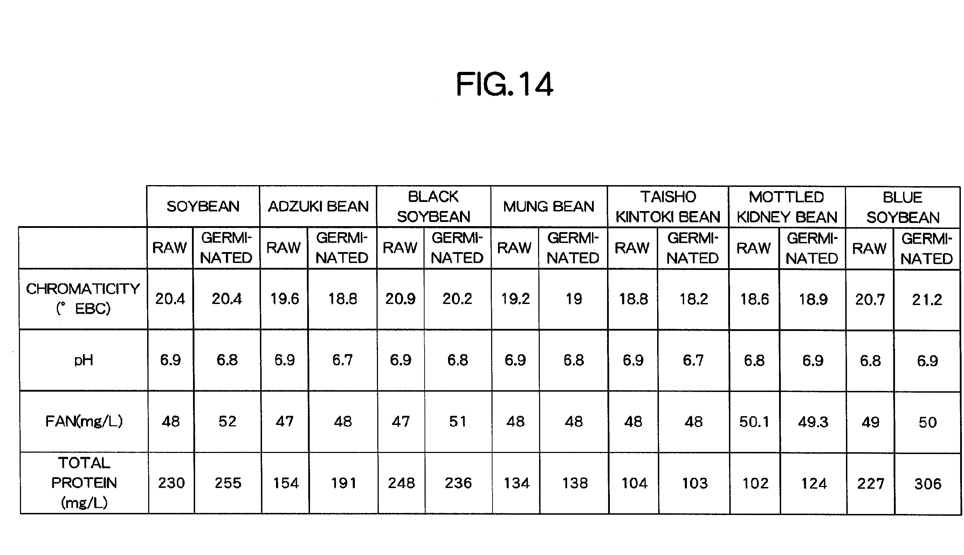

FIG. 14 illustrates the results of analysis on the same items as illustrated in FIG. 4, of the 14-kinds of pre-fermentation solutions. As illustrated in FIG. 14, the FAN concentration was higher in the case of use of a germinated legume as compared with the case of use of a raw legume, for soybeans, adzuki beans, black soybeans, and blue soybeans. The protein concentration was higher in the case of use of the germinated legume as compared with the case of use of the raw legume, for soybeans, adzuki beans, mung beans, mottled kidney beans, and blue soybeans. The pre-fermentation solutions each had a pH in the range of 6.7 to 6.9.

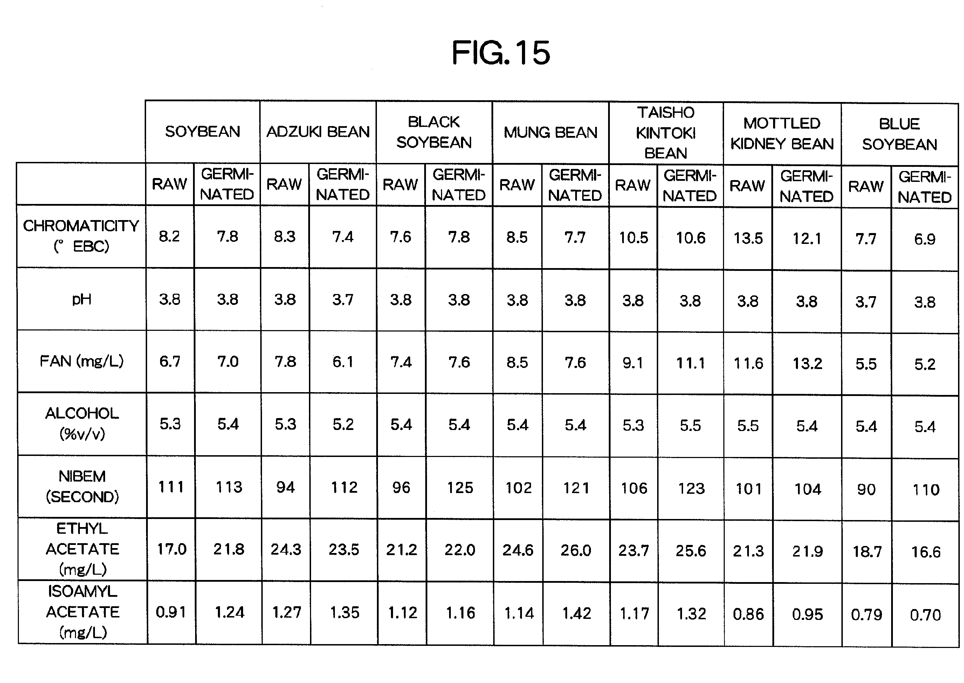

FIG. 15 illustrates the results of analysis on the same items as illustrated in FIG. 5, of the 14-kinds of sparkling alcoholic beverages. As illustrated in FIG. 15, the concentration of ethyl acetate contained in the sparkling alcoholic beverage was higher in the case of use of a germinated legume as compared with the case of use of a raw legume, for soybeans, black soybeans, mung beans, Taisho Kintoki beans, and mottled kidney beans. The concentration of isoamyl acetate was higher in the case of use of the germinated legume as compared with the case of use of the raw legume, for soybeans, adzuki beans, black soybeans, mung beans, Taisho Kintoki beans, and mottled kidney beans. The NIBEM value was higher in the case of use of the germinated legume as compared with the case of use of the raw legume, for all the legumes used.

Further, for the 14-kinds of sparkling alcoholic beverages, a sensory test was carried out by 7 skilled panelists. As a result, in the case of use of raw soybeans, the beverage had an astringent taste, harsh taste, and other unpleasant tastes which were strong, while there was no crispness. In the case of use of germinated soybeans, excellent evaluation results were obtained, that is, the beverage had a decreased astringent taste, in which a harsh taste and other unpleasant tastes disappeared while being increased in crispness, and had a mild and clear taste.

In the case of use of raw adzuki beans, acidity and an astringent taste were strong without having crispness, while in the case of use of germinated adzuki beans, excellent evaluation results were obtained, that is, an astringent taste disappeared while crispness was increased, and appropriate acidity and proper ester aroma were obtained.

In the case of use of raw black soybeans, there was no feature and no attraction, while in the case of use of germinated black soybeans, excellent evaluation results were obtained, that is, the beverage had an ester aroma and appropriate acidity, and a mild taste.

In the case of use of raw mung beans, the taste was flat, and lacked a clear feeling, while in the case of use of germinated mung beans, excellent evaluation results were obtained, that is, the beverage had appropriate acidity and excelled in flavor balance.

In the case of use of raw Taisho Kintoki beans, an astringent taste and a harsh taste were strong and there was no crispness, while in the case of use of germinated Taisho Kintoki beans, excellent evaluation results were obtained, that is, an astringent taste and a harsh taste disappeared, and acidity in harmony with an ester aroma was obtained.

In the case of use of raw mottled kidney beans, flavor balance was poor and acidity was strong, while in the case of use of germinated mottled kidney beans, an excellent evaluation result was obtained, that is, flavor balance was improved.

Though there was observed no significant difference between raw blue soybeans and germinated blue soybeans, when the germinated blue soybeans were used, it was evaluated that sweetness increased, making the beverage mild and easy to drink.

As described above, it was confirmed that by use of each germinated legume without using malt and hops as part of the raw materials, a sparkling alcoholic beverage having excellent features in flavor, taste, crispness, and the like, characteristic to each kind of the germinated legumes may be produced.

## Claims

1. A method of manufacturing a sparkling alcoholic beverage, comprising:
a pre-fermentation step of preparing a pre-fermentation solution by using germinated yellow peas without using hops as part of raw materials; and
a fermentation step of conducting alcohol fermentation by adding a yeast to the pre-fermentation solution.

2. A method of manufacturing a sparkling alcoholic beverage according to claim 1, wherein the pre-fermentation solution is prepared by using the germinated yellow peas in a range of 0.01 mass% to 0.35 mass% with respect to the raw materials in the pre-fermentation step.

3. A sparkling alcoholic beverage produced by the manufacturing method according to claim 1 or 2.
